# EUROPÄISCHE PATENTSCHRIFT

(11) **EP 1 395 752 B1**
(45) Veröffentlichungstag und Bekanntmachung des Hinweises auf die Patenterteilung: **09.08.2006**
(21) Anmeldenummer: 02726242.7
(22) Anmeldetag: 18.04.2002
(51) Int. Cl.: F03D 11/00, F03D 9/00, H02K 9/14

(54) **KÜHLUNG FÜR EINEN WINDTURBINENGENERATOR**
COOLING DEVICE FOR A WIND TURBINE GENERATOR
DISPOSITIF DE REFROIDISSEMENT CONCU POUR UN AEROGENERATEUR

(30) Priorität: 18.05.2001 DE 10124268
(43) Veröffentlichungstag der Anmeldung: 10.03.2004
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2002/004273
(87) Internationale Veröffentlichungsnummer: WO 2002/095222

(56) Entgegenhaltungen:
- EP-A- 0 611 922
- EP-A- 1 081 376
- DD-A- 256 169
- DE-A- 3 347 555
- DE-A- 19 636 591
- DE-C- 677 398
- FR-A- 2 756 676
- US-A- 4 840 222

## Beschreibung

Die vorliegende Erfindung betrifft eine Windenergieanlage mit einem Ringgenerator und einem Gehäuse mit einem wärmeleitenden Gehäuseabschnitt im Bereich des Ringgenerators.

Bei der Umformung von Energie entstehen regelmäßig Verluste in Form von Wärme. Dies gilt natürlich auch bei der Umformung der kinetischen Energie des Windes in elektrische Energie im Generator einer Windenergieanlage, wobei sich diese Verluste auch regelmäßig im Hauptantriebsstrang der Windenergieanlage einstellen. In dem Hauptantriebsstrang, welcher in der Gondel der Windenergieanlage untergebracht ist, entstehen die Verluste zu großen Teilen im Generator.

Diese Verlustwärme wird bislang unter Einsatz von Lüftern an die Umgebung abgeführt, entweder indem kalte Luft von außen angesaugt wird, oder indem die erwärmte Luft innerhalb des Turmes umgewälzt wird und die Wärme über die Turmwand nach außen abgeführt wird.

Aus der DD 256 169, welche als nächstkommender Stand der Technik betrachtet wird, ist eine Windenergieanlage mit einem Ringgenerator bekannt, dessen Stator formschlüssig von einem sogenannten Konvertergehäuse (Gondel) aufgenommen wird, welches wiederum mit Kühlblechen versehen ist.

Bei dieser bekannten Lösung ist es jedoch nachteilig, dass mechanische Schwingungen des Generators als akustische Störung wahrgenommen werden können.

DE 677 398 zeigt eine Windenergieanlage mit einem Ringgenerator und einem den Ringgenerator umgebenden Gondelgehäuse. Das Gondelgehäuse weist im Bereich des Ringgenerators einen wärmeleitenden Gehäuseabschnitt auf. Zwischen dem Außenumfang des Ringgenerators und dem wärmeleitenden Gehäuseabschnitt ist ein Abstand ausgebildet.

Aufgabe der vorliegenden Erfindung ist es, diesen Nachteil weitestgehend zu beseitigen.

Die Aufgabe wird bei einer Windenergieanlage der eingangs genannten Art erfindungsgemäß gelöst durch einen vorgegebenen Abstand zwischen dem Außenumfang des Ringgenerators und dem wärmeleitenden Gehäuseabschnitt, wobei der wärmeleitende Gehäuseabschnitt aus einem anderen Material besteht als der Rest des Gondelgehäuses.

Durch diesen vorgegebenen Abstand zwischen dem Außenumfang des Ringgenerators und dem wärmeleitenden Gehäuseabschnitt kommt es zu einer mechanischen Entkopplung von Generator und Gondel-Gehäuse, so dass mechanische Schwingungen von dem Generator nicht um das Gehäuse übertragen und somit in der Umgebung wahrgenommen werden können. Dabei muss zwar die Wärmeenergie durch Luft übertragen werden, dafür kann aber auch von dem Generator zunächst seitlich abgestrahlte Energie aufgenommen und nach außen abgegeben werden.

Eine besonders einfache Montagemöglichkeit ergibt sich, wenn der wärmeleitende Gehäuseabschnitt an einem feststehenden Teil des Gondel-Gehäuses befestigt wird.

Um die bei der Wärmeabfuhr wirksame Oberfläche zu erhöhen, können Kühlrippen über den Außenumfang verteilt in axialer Ausrichtung vorgesehen sein.

Besonders bevorzugt ist der wärmeleitende Abschnitt aus Aluminium herbestellt, da Aluminium in vorteilhafter Weise geringes Gewicht und eine gute Wärmeleitfähigkeit aufweist. Dabei ist in einer weiterhin bevorzugten Ausführungsform die Form des wärmeleitenden Gehäuseabschnittes der Form des Gondel-Gehäuses angepasst.

In einer bevorzugten Weiterbildung der vorliegenden Erfindung überragt der wärmeleitende Gehäuseabschnitt den Generator an wenigstens einer Seite um ein vorgegebenes Maß, um auch zunächst zur Seite abgestrahlte Wärmeanteile des Generators noch an die Umgebung ableiten zu können.

Vorteilhafte Ausführungsformen sind in den Unteransprüchen angegeben.

Im Folgenden wird die Erfindung anhand der Zeichnungen näher erläutert. Dabei zeigen;
- Figur 1: eine vereinfachte Seitenansicht einer erfindungsgemäßen Windenergieanlage; und
- Figur 2: eine vereinfachte Detailansicht einer alternativen Ausführungsform der vorliegenden Erfindung.

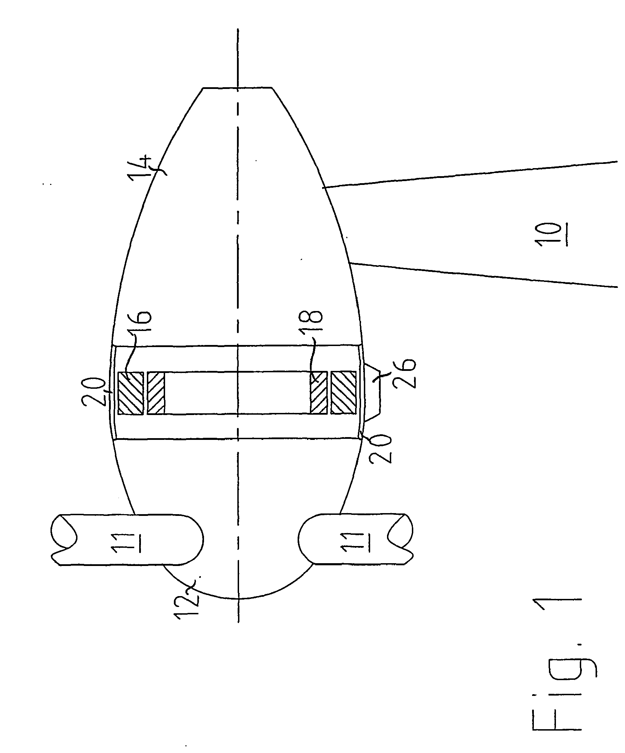

In Figur 1 bezeichnet 10 den oberen Abschnitt eines Turmes, der die Gondel der erfindungsgemäßen Windenergieanlage trägt. Diese Gondel weist einen vorderen Abschnitt 12 und einen hinteren Abschnitt 14 auf.

Der vordere Abschnitt 12 umfasst die Wurzeln der ansatzweise dargestellten Rotorblätter 11 und dreht sich mit dem Rotor.

Der hintere Abschnitt 14 umschließt den Ringgenerator mit seinem Stator 16 und seinem Läufer 18. Dementsprechend ist der Stator 16 wie der hintere Bereich der Gondel 14 feststehend, während der Läufer 18 durch die nicht dargestellte Rotornabe mit den Rotorblättern 11 zusammenwirkt.

Im Bereich des Generators 16, 18 ist mit einem vorgegebenen Abstand dazu ein Abschnitt 20 des hinteren Teiles des Gondelgehäuses 14 aus einem wärmeleitenden Material, bevorzugt Aluminium, ausgebildet. Dieser wärmeleitende Gehäuseabschnitt 20 nimmt die von dem Generator 16, 18 abgestrahlte Wärme auf und leitet sie an die vorbeiströmende Umgebungsluft ab. Aufgrund des vorgegebenen Luftspaltes zwischen dem Stator 16 des Generators und dem wärmeleitenden Gehäuseabschnitt 20 besteht keine direkte mechanische Verbindung zwischen diesen beiden Komponenten, so dass Vibrationen von dem Generator nicht auf diesen wärmeleitenden Gehäuseabschnitt 20 übertragen und somit außen hörbar werden.

Da der wärmeleitende Gehäuseabschnitt 20 in axialer Richtung breiter ist als der Generator, kann er auch vom Generator 16, 18 zunächst seitlich abgestrahlte Wärmeanteile aufnehmen und an die Umgebung ableiten.

In dem Bereich zwischen dem Kopf des Turmes 10 und dem abwärts weisenden Rotorblattansatz 11 ist auf einem wärmeableitenden Gehäuseabschnitt 20 des Gondelgehäuses 14 außenseitig eine Kühlrippe 26 dargestellt. Diese Kühlrippe 26 vergrößert die Oberfläche des wärmeableitenden Gehäuseabschnittes 20, so dass die Wärme noch besser an die Außenumgebung abgegeben werden kann. Solche Kühlrippen 26 können - innenseitig und/oder außenseitig - auf dem gesamten Außenumfang (oder Teilen hiervon) (oder auf dem Innenumfang) des Gondelgehäuses angeordnet sein. Sind solche Kühlrippen innenseitig angeordnet, so sind die Kühlrippen vor allem in dem Seitenbereich des wärmeleitenden Gehäuseabschnittes 20 ausgebildet, der nicht direkt oberhalb des Status 16 des Generators ausgebildet ist.

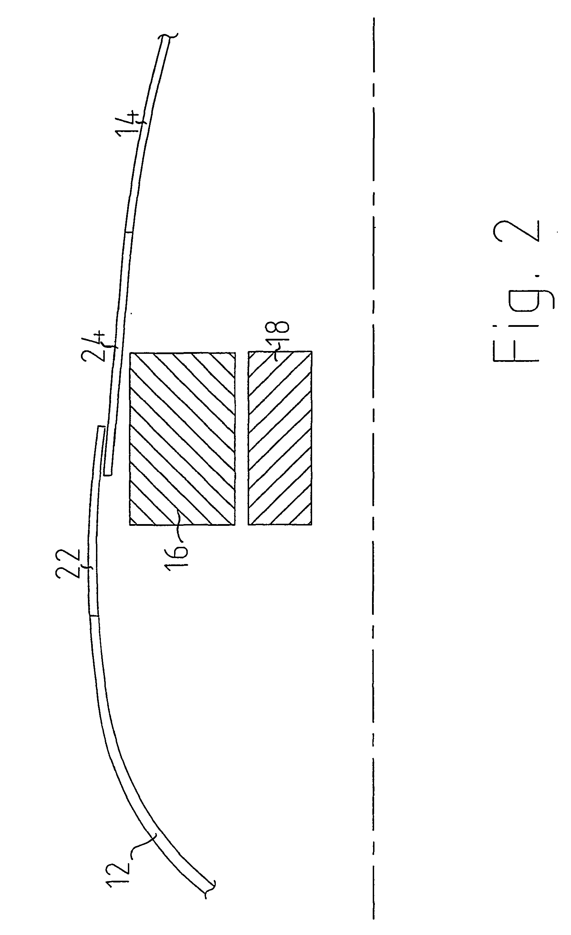

Figur 2 zeigt eine alternative Ausführungsform, bei welcher der wärmeleitende Gehäuseabschnitt 20 in zwei Abschnitte 22 und 24 aufgeteilt ist, die einander überlappen. Dabei ist ein Gehäuseabschnitt 12 mit einem Teil des wärmeleitenden Gehäuseabschnittes 22 verbunden, während der zweite Teil der Gondel 14 mit einem zweiten Teil des wärmeleitenden Gehäuseabschnittes 24 verbunden ist. Sowohl der Gehäuseabschnitt 12 als auch das Gondelgehäuse 14 sind hierbei bevorzugt aus einem nicht metallischen Werkstoff und somit nicht ideal wärmeleitendem Stoff, beispielsweise GFK, gefertigt.

Da die in dieser Ausführungsform dargestellte Windenergieanlage ein sogenannter Luvläufer ist, wird der Wind immer zuerst über den ersten Gehäuseabschnitt 12 mit dem darin anschließenden wärmeleitenden Gehäuseabschnitt 22 strömen, bevor er den zweiten wärmeleitenden Gehäuseabschnitt 24 erreicht, der dann in den zweiten Gondelabschnitt 14 übergeht. Daher wird Feuchtigkeit durch den Wind stets von dem Abschnitt 22 und dann über den Abschnitt 24 zur Rückseite (Lee-Seite) der Windenergieanlage transportiert und kann durch einen Spalt zwischen den Abschnitten 22 und 24 nicht in nennenswerter Weise in die Gondel eindringen.

Natürlich können zwischen den beiden wärmeleitenden Gehäuseabschnitten 22, 24 Dichtungsmittel vorgesehen sein, die ein Eindringen von Feuchtigkeit noch weiter erschweren.

Steht das Gondelinnengehäuse unter einem gewissen Überdruck, kann über den Spalt zwischen den beiden Gehäuseabschnitten 22, 24 die Luft entweichen, so dass jeglicher Eintritt von Feuchtigkeit in das Gondelinnere verhindert werden kann.

Auch in dieser Ausführungsform der vorliegenden Erfindung ist die Ausdehnung der wärmeleitenden Gehäuseabschnitte 22, 24 in axialer Richtung deutlich größer als die Ausdehnung des Generators 16, 18, um wiederum seitlich abgestrahlte Wärme ableiten zu können.

## Patentansprüche

1. Windenergieanlage mit einem Ringgenerator (16) und einem den Ringgenerator umgebenden Gondelgehäuse (12, 14) der Windenergieanlage, wobei das Gondelgehäuse (12, 14) im Bereich des Ringgenerators einen wärmeleitenden Gehäuseabschnitt (20) aufweist und zwischen dem Außenumfang des Ringgenerators (16) und dem wärmeableitenden Gehäuseabschnitt (20) ein vorgegebener Abstand ausgebildet ist,
**dadurch gekennzeichnet, dass** der wärmeableitende Gehäuseabschnitt (20) aus einem anderen Material besteht als der Rest des Gondelgehäuses.

2. Windenergieanlage nach Anspruch 1,
**gekennzeichnet durch** eine Befestigung des wärmeleitenden Gehäuseabschnittes (20, 24) an einem feststehenden Teil des Gehäuses (14).

3. Windenergieanlage nach einem der vorstehenden Ansprüche,
**gekennzeichnet durch** auf dem Außenumfang beabstandet angeordnete Kühlrippen (26) in axialer Ausrichtung.

4. Windenergieanlage nach Anspruch 1,
**gekennzeichnet durch** eine Befestigung des wärmeleitenden Gehäuseabschnittes (20, 22) an einem drehenden Teil des Gehäuses (12),

5. Windenergieanlage nach Anspruch 1,
**gekennzeichnet durch** eine Aufteilung des wärmeleitenden Gehäuseabschnittes (22, 24) entlang des Umfangs in zwei voneinander getrennte Abschnitte, wobei der erste Abschnitt (22) an dem drehenden Teil des Gehäuses (12) und der zweite Abschnitt (24) an dem feststehenden Teil des Gehäuses (14) angebracht ist.

6. Windenergieanlage nach Anspruch 5,
**gekennzeichnet durch** Kühlrippen an dem zweiten Teil des wärmeleitenden Gehäuseabschnittes (24).

7. Windenergieanlage nach einem der Ansprüche 5 oder 6,
**dadurch gekennzeichnet, dass** der erste Teil des wärmeleitenden Gehäuseabschnittes (22) den zweiten Teil des wärmeleitenden Gehäuseabschnittes (24) überlappt.

8. Windenergieanlage nach einem der Ansprüche 5 bis 7,
**gekennzeichnet durch** Dichtungsmittel zwischen den ersten und zweiten wärmeleitenden Gehäuseabschnitten (22, 24).

9. Windenergisanlage nach einem der vorstehenden Ansprüche,
**dadurch gekennzeichnet, dass** der wärmeleitende Gehäuseabschnitt (20, 22, 24) im Wesentlichen aus Aluminium hergestellt ist,

10. Windenergieanlage nach einem der vorstehenden Ansprüche,
**dadurch gekennzeichnet, dass** die Form des wärmeleitenden Gehäuseabschnittes (20, 22, 24) der Form des Gondelgehäuses (12, 14) angepasst ist.

11. Windenergieanlage nach einem der vorstehenden Ansprüche,
**dadurch gekennzeichnet, dass** der wärmeleitende Gehäuseabschnitt (20, 22, 24) den Generator (16, 18) an wenigstens einer Seite um ein vorgegebenes Maß in axialer Richtung überragt.

12. Windenergieanlage nach Anspruch 6,
**dadurch gekennzeichnet, dass** die Kühlrippen außenseitig und/oder innenseitig an dem wärmeleitenden Gehäuseabschnitt ausgebildet sind.

## Claims

1. Wind energy plant with a ring generator (16) and a gondola housing (12, 14) of the wind energy plant surrounding the ring generator, wherein the gondola housing (12, 14) has a heat conducting housing portion (20) in the region of the ring generator and in that a predetermined distance is formed between the outer periphery of the ring generator (16) and the heat discharging housing portion (20), **characterised in that** the heat discharging housing portion (20) consists of a material different from the that of the remainder of the gondola housing.

2. The wind energy plant according to Claim 1, **characterised in that** the heat conducting housing portion (20, 24) is secured to a fixed part of the housing (14).

3. The wind energy plant according to any one of the preceding claims, **characterised by** cooling ribs (26) in axial alignment so that they are uniformly spaced on the outer periphery.

4. The wind energy plant according to Claim 1, **characterised in that** the heat conducting housing portion (20, 22) is secured to a rotary part of the housing (12).

5. The wind energy plant according to Claim 1, **characterised in that** the heating conducting housing portion (22, 24) is divided along the periphery into two separate portions, wherein the first portion (22) is fitted on the rotary part of the housing (12) and the second portion (24) is fitted on the fixed part of the housing (14).

6. The wind energy plant according to Claim 5, **characterised by** cooling ribs on the second part of the heat conducting housing portion (24).

7. The wind energy plant according to any one of Claims 5 or 6, **characterised in that** the first part of the conducting housing portion (22) overlaps the second part of the heat conducting housing portion (24).

8. The wind energy plant according to any one of Claims 5 to 7, **characterised by** sealing agents between the first and second heat conducting housing portions (22, 24).

9. The wind energy plant according to any one of the preceding claims, **characterised in that** the heat conducting housing portion (20, 22, 24) is manufactured substantially from aluminium.

10. The wind energy plant according to any one of the preceding claims, **characterised in that** the shape of the heat conducting housing portion (20, 22, 24) is adapted to the shape of the gondola housing (12, 14).

11. The wind energy plant according to any one of the preceding claims, **characterised in that** the heat conducting housing portion (20, 22, 24) projects from the generator (16, 18) on at least one side by a predetermined dimension in the axial direction.

12. The wind energy plant according to Claim 6, **characterised in that** the cooling ribs are formed on the outside and/or inside of the heat conducting housing portion.

## Revendications

1. Installation d'énergie éolienne avec un générateur annulaire (16) et une nacelle (12, 14) d'installation d'énergie éolienne enveloppant le générateur annulaire, la nacelle (12, 14) présentant une section de nacelle (20) thermoconductrice dans la zone du générateur annulaire et un espacement défini étant formé entre le périmètre extérieur du générateur annulaire (16) et la section de nacelle (20) dissipatrice de chaleur,
**caractérisée en ce que** la section de nacelle (20) dissipatrice de chaleur est constituée d'un autre matériau que le reste de la nacelle.

2. Installation d'énergie éolienne selon la revendication 1,
**caractérisée par** une fixation de la section de nacelle (20, 24) thermoconductrice à une partie fixe de la nacelle (14).

3. Installation d'énergie éolienne selon l'une quelconque des revendications précédentes,
**caractérisée par** des ailettes de refroidissement (26) disposées de façon espacée sur le périmètre extérieur et dans le sens axial.

4. Installation d'énergie éolienne selon la revendication 1,
**caractérisée par** une fixation de la section de nacelle (20, 22) thermoconductrice à une partie rotative de la nacelle (12).

5. Installation d'énergie éolienne selon la revendication 1,
**caractérisée par** un fractionnement de la section de nacelle (22, 24) thermoconductrice le long du périmètre en deux sections séparées l'une de l'autre, la première section (22) étant fixée à la partie rotative de la nacelle (12) et la seconde section (24) étant fixée à la partie fixe de la nacelle (14).

6. Installation d'énergie éolienne selon la revendication 5,
**caractérisée par** des ailettes de refroidissement sur la seconde partie de la section de nacelle (24) thermoconductrice.

7. Installation d'énergie éolienne selon l'une des revendications 5 ou 6,
**caractérisée en ce que** la première partie de la section de nacelle (22) thermoconductrice chevauche la seconde partie de la section de nacelle (24) thermoconductrice.

8. Installation d'énergie éolienne selon l'une quelconque des revendications 5 à 7,
**caractérisée par** des produits d'étanchéité entre les première et seconde sections de nacelle (22, 24) thermonconductrices.

9. Installation d'énergie éolienne selon l'une quelconque des revendications précédentes,
**caractérisée en ce que** la section de nacelle (20, 22, 24) thermoconductrice est réalisée essentiellement en aluminium.

10. Installation d'énergie éolienne selon l'une quelconque des revendications précédentes,
**caractérisée en ce que** la forme de la section de nacelle (20, 22, 24) thermoconductrice est adaptée à la forme de la nacelle (12 ,14).

11. Installation d'énergie éolienne selon l'une quelconque des revendications précédentes,
**caractérisée en ce que** la section de nacelle (20, 22, 24) thermoconductrice dépasse le générateur (16, 18) d'une dimension définie et dans le sens axial sur au moins un côté.

12. Installation d'énergie éolienne selon la revendication 6,
**caractérisée en ce que** les ailettes de refroidissement sont formées sur la face extérieure et/ou intérieure de la section de nacelle thermoconductrice.
